# EUROPEAN PATENT APPLICATION

(11) **EP 4 648 142 A1**
(43) Date of publication of application: **12.11.2025**
(21) Application number: 25175025.3
(22) Date of filing: 08.05.2025
(51) Int. Cl.: H01M 4/66, H01M 10/0525

(54) **COMPOSITE SUBSTRATE FOR RECHARGEABLE LITHIUM BATTERY, AND RECHARGEABLE LITHIUM BATTERY INCLUDING THE SAME**

(30) Priority: 10.05.2024 KR 20240061877
(71) Applicant: SAMSUNG SDI CO., LTD., Yongin-si, Gyeonggi-do 17084 (KR)
(72) Inventor: KIM, Suhyun, 17084 Gyeonggi-do (KR); HWANG, Heeyeon, 17084 Gyeonggi-do (KR); KANG, Dayoung, 17084 Gyeonggi-do (KR); KWON, Minseok, 17084 Gyeonggi-do (KR); LEE, KyuSeo, 17084 Gyeonggi-do (KR); CHA, Jungwook, 17084 Gyeonggi-do (KR)
(74) Representative: Michalski Hüttermann & Partner Patentanwälte mbB

(57) **Abstract**

Disclosed are composite substrates, and rechargeable lithium batteries including the composite substrates. A composite substrate includes a support layer, a first metal layer on a top surface of the support layer, and a second metal layer on a bottom surface of the support layer. The support layer includes a first polymer and a second polymer that are different from each other. A tensile strength of the second polymer is greater than a tensile strength of the first polymer. An elongation of the first polymer is greater than an elongation of the second polymer.

## Description

### CROSS-REFERENCE TO RELATED APPLICATION

This U.S. nonprovisional application claims priority under 35 U.S.C § 119 to Korean Patent Application No. 10-2024-0061877 filed on May 10, 2024 in the Korean Intellectual Property Office, the disclosure of which is hereby incorporated by reference in its entirety.

### BACKGROUND

The present disclosure relates to a composite substrate for a rechargeable lithium battery, and a rechargeable lithium battery including the composite substrate.

With the increased spread of batteries using electronic devices, such as, e.g., mobile phones, laptop computers, and electric vehicles, there is increasing demand for rechargeable batteries with high energy density and high capacity.

A rechargeable lithium battery typically includes a positive electrode, a negative electrode, and an electrolyte, the positive and negative electrodes including an active material in which intercalation and deintercalation are possible, and generates electrical energy caused by oxidation and reduction reactions when lithium ions are intercalated and deintercalated.

### SUMMARY

An example embodiment of the present disclosure includes a composite substrate configured to improve battery safety and to reduce or prevent deformation such as elongation during battery fabrication process.

An example embodiment of the present disclosure includes a rechargeable lithium battery including the composite substrate.

According to an example embodiment of the present disclosure, a composite substrate for a rechargeable lithium battery may include a support layer, a first metal layer on a top surface of the support layer, and a second metal layer on a bottom surface of the support layer. The support layer may include a first polymer and a second polymer that are different from each other. A tensile strength of the second polymer may be greater than a tensile strength of the first polymer. An elongation of the first polymer may be greater than an elongation of the second polymer.

According to an example embodiment of the present disclosure, a composite substrate for a rechargeable lithium battery may include a support layer, a first metal layer on a top surface of the support layer, and a second metal layer on a bottom surface of the support layer. The support layer may include a first support layer and a second support layer that are stacked, e.g., sequentially stacked. A tensile strength of the second support layer may be greater than a tensile strength of the first support layer. An elongation of the first support layer may be greater than an elongation of the second support layer.

According to an example embodiment of the present disclosure, a rechargeable lithium battery may include a composite substrate of the present disclosure.

### BRIEF DESCRIPTION OF DRAWINGS

FIG. 1 illustrates a simplified conceptual diagram showing a rechargeable lithium battery, according to an example embodiment of the present disclosure.
FIGS. 2 to 5 illustrate simplified diagrams showing a rechargeable lithium battery, according to example embodiments of the present disclosure.
FIG. 6 illustrates a cross-sectional view showing a rechargeable lithium battery, according to an example embodiment of the present disclosure.
FIGS. 7 to 9 illustrate cross-sectional views showing a composite substrate, according to an example embodiment of the present disclosure.

### DETAILED DESCRIPTION OF EMBODIMENTS

In order to sufficiently understand the configuration and effect of the present disclosure, some example embodiments of the present disclosure will be described with reference to the accompanying drawings. It should be noted, however, that the present disclosure is not limited to the following example embodiments, and may be implemented in various forms. Rather, the example embodiments are provided only to disclose the present disclosure and let those skilled in the art to fully know the scope of the present disclosure.

In this description, it will be understood that, when an element is referred to as being "on" another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D₅₀) where a cumulative volume is about 50 volume % in a particle size distribution. The average particle diameter (D₅₀) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter (D₅₀) value may be obtained through a calculation. Dissimilarly, a laser scattering method may be utilized to measure the average particle diameter (D₅₀). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

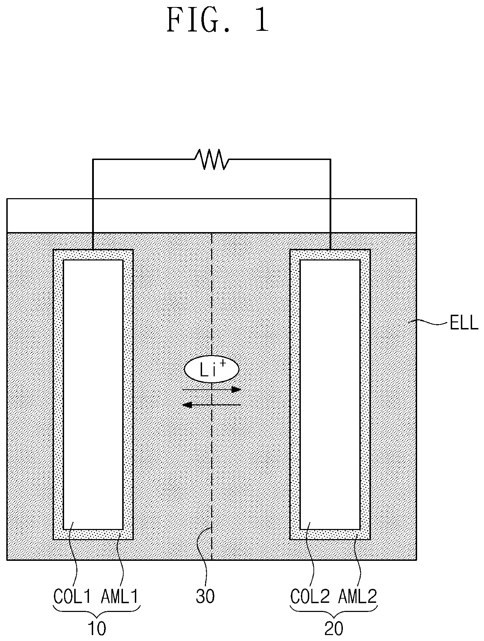

FIG. 1 illustrates a simplified conceptual diagram showing a rechargeable lithium battery, according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material, and may further include a binder and/or a conductive material.

For example, the positive electrode 10 may further include an additive that constitutes a sacrificial positive electrode.

An amount of the positive electrode active material may be ≥ 90 wt% to ≤ 99.5 wt% relative to 100 wt% of the positive electrode active material layer AML1. An amount of each of, or of one of, the binder and the conductive material may be ≥ 0.5 wt% to ≤ 5 wt% relative to 100 wt% of the positive electrode active material layer AML1.

The binder may be configured to improve attachment of positive electrode active material particles to each other, and also to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may provide an electrode with conductivity, and any suitable conductive material that does not cause chemical change to the battery may be used as the conductive material to constitute the battery. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may be used as the current collector COL1, but the present disclosure is not limited thereto.

### Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and a metal that includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{d}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); LiₐFePO₄ (where 0.90≤a≤1.8).

In the chemical formulae above, A is or includes Ni, Co, Mn, or a combination thereof, X is or includes Al, Ni, Co, Mn, Cr, Fe, Mg, Sr, V, a rare-earth element, or a combination thereof, D is or includes O, F, S, P, or a combination thereof, G is or includes Al, Cr, Mn, Fe, Mg, La, Ce, Sr, V, or a combination thereof, and L¹ is or includes Mn, Al, or a combination thereof.

For example, the positive electrode active material may be or include a high-nickel-based positive electrode active material having a nickel amount that is equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in the lithium transition metal composite oxide. The high-nickel-based positive electrode active material may achieve high capacity and thus may be applied to a high-capacity and high-density rechargeable lithium battery.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material of ≥ 90 wt% to ≤ 99 wt%, a binder of ≥ 0.5 wt% to ≤ 5 wt%, and a conductive material of ≥ 0 wt% to ≤ 5 wt%.

The binder may be configured to improve the attachment or adhesion of negative electrode active material particles to each other, and also to improve the attachment or adhesion of the negative electrode active material to the current collector COL2. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material may provide an electrode with conductivity, and any suitable conductive material that does not cause chemical change of a battery may be used as the conductive material to constitute the battery. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, at least one of crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, SiOx (where 0<x<2), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, SnO₂, a Sn-based alloy, a combination thereof.

The silicon-carbon composite may be a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer positioned on a surface of the core.

The Si-based negative electrode active material or the Sn-based negative electrode active material may be used in combination with a carbon-based negative electrode active material.

### Separator 30

Based on the type of the rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, which coating layer includes an organic material, an inorganic material, or a combination thereof.

The porous substrate may be or include a polymer layer including at least one of a polyolefin such as polyethylene and polypropylene, polyester such as at least one of polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer or a (meth)acrylic copolymer.

The inorganic material may include an inorganic particle that includes at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in one coating layer or may be present as a stack of a coating layer including the organic material and a coating layer including an inorganic material.

### Electrolyte ELL

The electrolyte ELL for the rechargeable lithium battery may include a non-aqueous organic solvent and a lithium salt.

The non-aqueous organic solvent may constitute a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more of the above solvents.

In addition, when a carbonate-based solvent is used, a cyclic carbonate and a chain carbonate may be mixed and used, and the cyclic carbonate and the chain carbonate may be mixed in a volume ratio of 1:1 to 1:9.

The lithium salt may be or include a material that dissolves in the non-aqueous organic solvent to constitute a supply source of lithium ions in a battery, and that plays a role in enabling a basic operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluorobis(oxalato)phosphate (LiDFBOP), and lithium bis(oxalato)borate (LiBOB)

### Rechargeable Lithium Battery

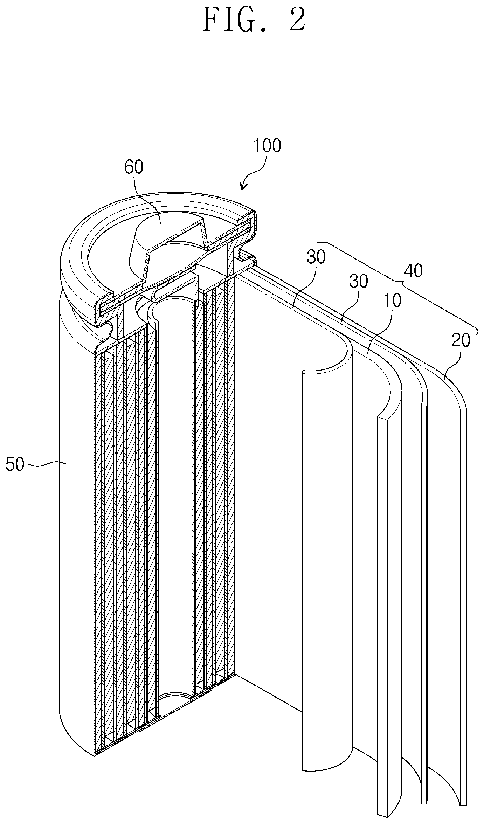

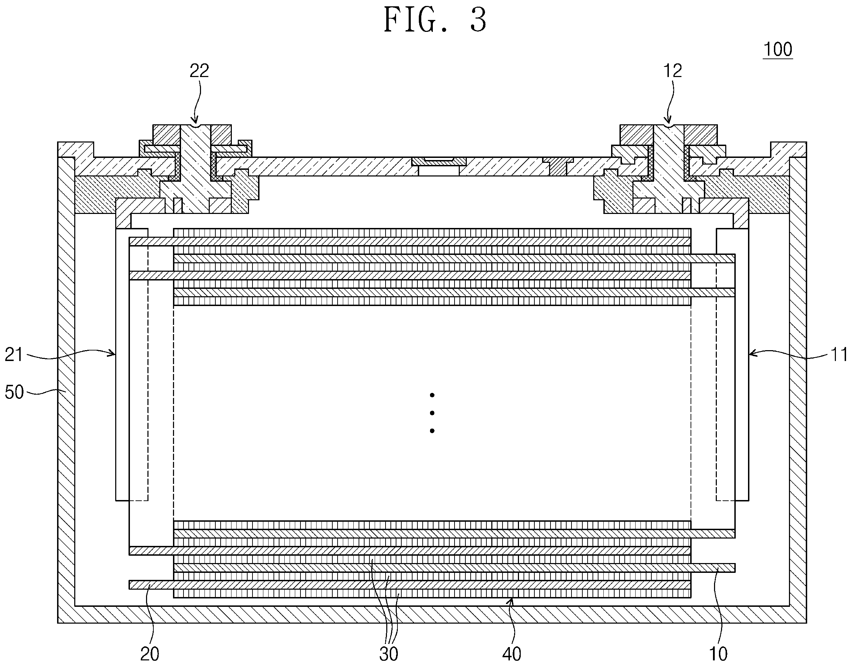

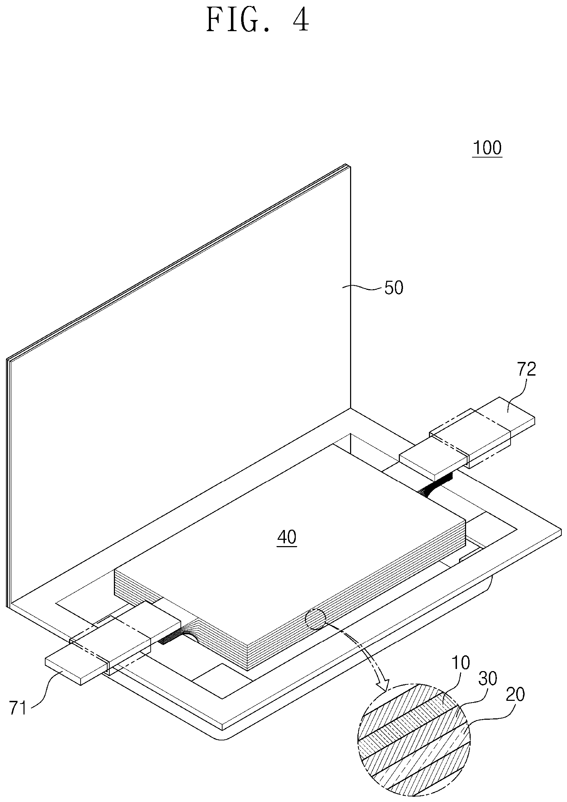

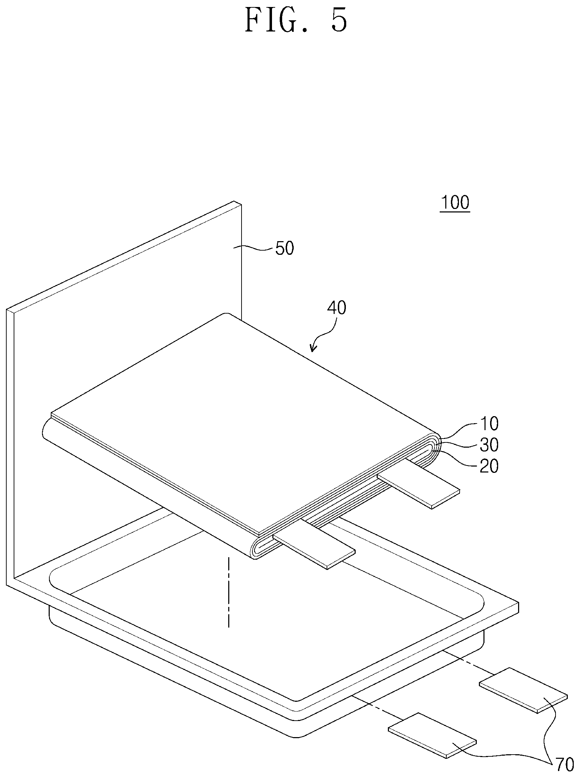

Based on the shape of the rechargeable lithium battery, the rechargeable lithium battery may be classified into cylindrical, prismatic, pouch, and coin types. FIGS. 2 to 5 illustrate simplified diagrams showing a rechargeable lithium battery according to an example embodiment, FIG. 2 showing a cylindrical battery, FIG. 3 showing a prismatic battery, and FIGS. 4 and 5 showing pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for externally inducing a current generated in the electrode assembly 40.

In the example embodiments that follow, a detailed description of technical features repetitive to those of the rechargeable lithium battery discussed above with reference to FIGS. 1 to 5 may be omitted, and a difference thereof is discussed below in detail.

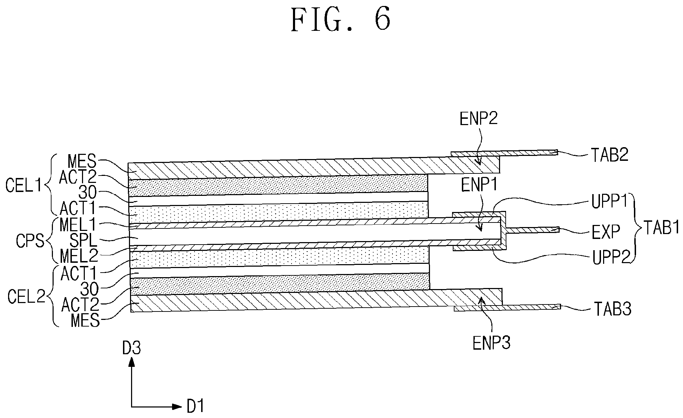

FIG. 6 illustrates a cross-sectional view showing a rechargeable lithium battery according to an example embodiment of the present disclosure. Referring to FIG. 6, which illustrates a composite substrate CPS, a first battery cell CEL1 on one surface of the composite substrate CPS, and a second battery cell CEL2 on another surface of the composite substrate CPS. A single bi-cell may be constituted by the first battery cell CEL1, the second battery cell CEL2, and the composite substrate CPS of FIG. 6. The first battery cell CEL1, the second battery cell CEL2, and the composite substrate CPS of FIG. 6 may constitute the electrode assembly 40 discussed above with reference to FIGS. 3 to 5.

Each of, or one of, the first battery cell CEL1 and the second battery cell CEL2 may include a first active material layer ACT1, a separator 30, a second active material layer ACT2, and a metal substrate MES. The first active material layer ACT 1 may be provided on the composite substrate CPS. The second active material layer ACT2 may be spaced apart from the first active material layer ACT1 across the separator 30. The metal substrate MES may be provided on the second active material layer ACT2.

The first active material layer ACT1 may be one of the positive electrode active material layer AML 1 and the negative electrode active material layer AML2 that are discussed above with reference to FIG. 1. The second active material layer ACT2 may be the other of the positive electrode active material layer AML 1 and the negative electrode active material layer AML2 that are discussed above with reference to FIG. 1. In an example embodiment of the present disclosure, the first active material layer ACT1 may be or include the positive electrode active material layer AML1, and the second active material layer ACT2 may be or include the negative electrode active material layer AML2. The metal substrate MES may be or include the current collector COL1 or COL2 discussed above with reference to FIG. 1.

The metal substrate CPS may include a support layer SPL, and may also include a first metal layer MEL1 and a second metal layer MEL2 located on opposite surfaces of the support layer SPL. The first metal layer MEL1 of the composite substrate CPS may be in contact with the first active material layer ACT1 of the first battery cell CEL1. The second metal layer MEL2 of the composite substrate CPS may be in contact with the first active material layer ACT1 of the second battery cell CEL2. Each of, or one of, the first and second metal layers MEL1 and MEL2 of the composite substrate CPS may correspond to one of the current collectors COL1 and COL2 that are discussed above with reference to FIG. 1.

The support layer SPL may include a polymer film. For example, the support layer SPL may include at least one of a polyethylene film, a polypropylene film, a polyvinylidene chloride film, or a multi-layered film including a combination thereof. The support layer SPL may have desired or improved ion permeability and superior mechanical strength.

Each of, or one of, the first and second metal layers MEL1 and MEL2 may include at least one of aluminum, aluminum alloys, copper, copper alloys, nickel, nickel alloys, titanium, titanium alloys, iron, iron alloys, silver, and silver alloys.

In an example embodiment, each of, or one of, the first and second metal layers MEL 1 and MEL2 may have a thickness between greater than 0 µm and equal to or less than 5 µm. For example, each of, or one of, the first and second metal layers MEL 1 and MEL2 may have a thickness of ≥ 200 nm to ≤ 5 µm. The support layer SPL may have a thickness of ≥ 2 µm to ≤ 10 µm. For example, the support layer SPL may have a thickness of ≥ 3 µm to ≤ 10 µm. The thickness of the support layer SPL may be greater than the thickness of each of the first and second metal layers MEL 1 and MEL2.

The composite substrate CPS may have a first end portion ENP1 at one end thereof. The metal substrate MES of the first battery cell CEL1 may include a second end portion ENP2 at one end thereof. The metal substrate MES of the second battery cell CEL2 may include a third end portion ENP3 at one end thereof.

A first tab TAB1 may be provided on the first end portion ENP1 of the composite substrate CPS. The first tab TAB1 may include a first connection portion UPP1, a second connection portion UPP2, and an extension portion EXP. The first connection portion UPP1 may be in contact with the first metal layer MEL1 of the composite substrate CPS. The second connection portion UPP2 may be in contact with the second metal layer MEL2 of the composite substrate CPS. The extension portion EXP may connect the first connection portion UPP1 and the second connection portion UPP2 to each other. The extension portion EXP may horizontally extend in a first direction D1 from the first end portion ENP1.

The first tab TAB1 may electrically connect the first metal layer MEL1 and the second metal layer MEL2 to each other. The first tab TAB1 may be configured to apply a voltage in common to the first metal layer MEL 1 and the second metal layer MEL2.

A second tab TAB2 may be provided on the second end portion ENP2 of the metal substrate MES. The second tab TAB2 may be configured to apply a voltage to the metal substrate MES of the first battery cell CEL1. A third tab TAB3 may be provided on the third end portion ENP3 of the metal substrate MES. The third tab TAB3 may be configured to apply a voltage to the metal substrate MES of the second battery cell CEL2.

The first tab TAB1 may constitute one of positive and negative electrode tabs (or positive and negative electrode lead tabs) discussed above with reference to FIGS. 2 to 5. The second and third tabs TAB2 and TAB3 may constitute the other of positive and negative electrode tabs (or positive and negative electrode lead tabs) discussed above with reference to FIGS. 2 to 5.

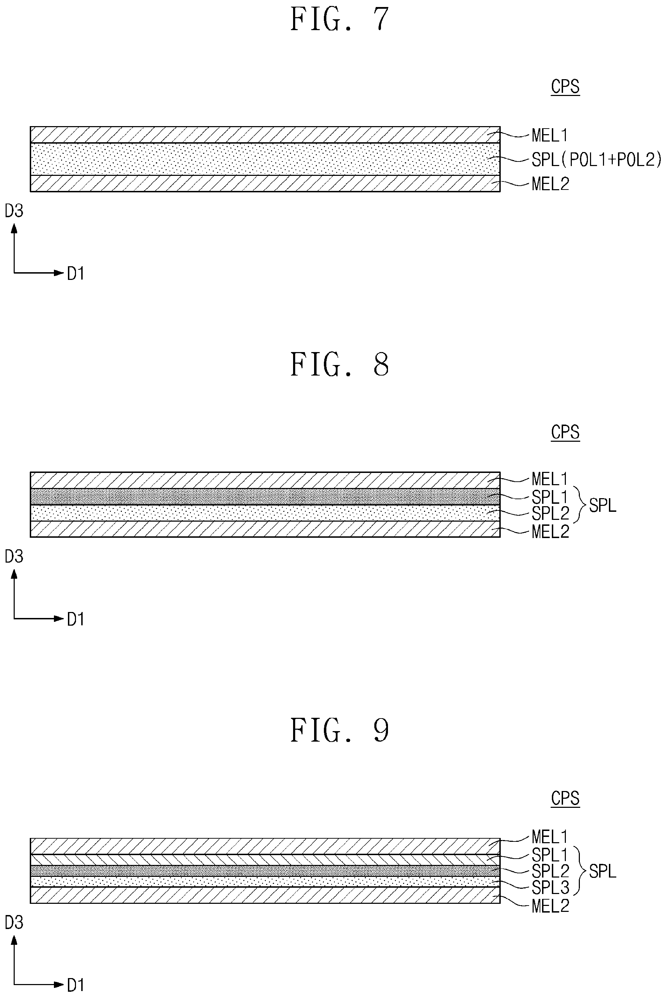

FIGS. 7 to 9 illustrate cross-sectional views showing a composite substrate according to an example embodiment of the present disclosure. In the following, a description of components the same as the components discussed with reference to FIG. 6 may be omitted, and a difference thereof will be discussed in detail.

Referring to FIG. 7, the support layer SPL may include a first polymer POL1 and a second polymer POL2. The first polymer POL1 and the second polymer POL2 may be different from each other.

The first and second polymers POL1 and POL2 may have different molecular weights from each other. For example, a weight average molecular weight of the first polymer POL1 may range from ≥ 1,000 to ≤ 25,000. A weight average molecular weight of the second polymer POL2 may range from ≥ 25,000 to ≤ 45,000.

An elongation of the first polymer POL1 may be greater than the elongation of the second polymer POL2. Each of, or one of, the first and second polymers POL1 and POL2 may be in the form of a film. When the first polymer POL1 and the second polymer POL2 are each formed into a film having a thickness of 2 µm to 4 µm, the elongation may be defined to refer to a permanent deformation until the film breaks under load. For example, the elongation of the first polymer POL1 may range from ≥ 50% to ≤ 100%, and the elongation of the second polymer POL2 may range from ≥ 2% to ≤ 30%. Even when a battery is punctured, the first polymer POL1 may reduce or prevent contact between metals included in the battery, and reduce or prevent an abrupt increase in current. The first polymer POL1 may increase the safety of the battery.

A tensile strength of the second polymer POL2 may be greater than the tensile strength of the first polymer POL1. When the first polymer POL1 and the second polymer POL2 are each formed into a film having a thickness of 2 µm to 4 µm, the tensile strength may refer to a maximum tensile stress that the film can withstand before the occurrence of permanent deformation or failure. The tensile strength of the first polymer POL1 may range from ≥ 100 N/mm² to ≤ 240 N/mm², and the tensile strength of the second polymer POL2 may range from ≥ 250 N/mm² to ≤ 500 N/mm². For example, the tensile strength of the first polymer POL1 may range from ≥ 200 N/mm² to ≤ 230 N/mm². The tensile strength of the second polymer POL2 may range from ≥ 250 N/mm² to ≤ 300 N/mm². The second polymer POL2 may reduce or prevent the composite substrate CPS from being deformed during the battery fabrication process.

Each of, or one of, the first polymer POL1 and the second polymer POL2 may include at least one of polyamide (PA), polyimide (PI), polyamideimide (PAI), polyether ether ketone, polyacrylic acid (PAA), polycarbonate (PC), polyethylene terephthalate (PET), polyethylene (PE), polypropylene (PP), polyethylene naphthalate (PEN), acrylonitrile butadiene styrene (ABS), polyvinyl chloride (PVC), polystyrene (PS), poly(p-phenylene oxide (PPO), acrylic resin, polybutylene terephthalate (PBT), and poly(methyl methacrylate) (PMMA). The polyethylene (PE) may be, for example, low-density polyethylene (LDPE) or high-density polyethylene (HDPE). The acrylic resin may be or include, for example, a resin formed of or including a monomer mainly composed of acrylic acid or methacrylic acid, or a derivative thereof.

For example, the first polymer POL1 may be or include polyethylene terephthalate (PET), polyethylene (PE), or polypropylene (PP). The polyethylene (PE) may be low-density polyethylene (LDPE) or high-density polyethylene (HDPE). For example, the second polymer POL2 may be polycarbonate (PC), polyimide (PI), polyamide(PA), polyamideimide (PAI), polybutylene terephthalate (PBT), or polyether ether ketone.

The first polymer POL1 and the second polymer POL2 may have a weight ratio of 9:1 to 5:5. For example, the weight ratio of the first polymer POL1 and the second polymer POL2 may range from 7:3 to 5:5 or from 6:4 to 5:5. The weight ratio may refer to a converted value of an amount of the first polymer POL1 or the second polymer POL2 relative to the total weight of the first polymer POL1 and the second polymer POL2. When the weight ratio of the first polymer POL1 and the second polymer POL2 falls within the range above, the shape of the composite substrate CPS may be maintained during battery fabrication process even while ensuring battery safety.

Referring to FIG. 8, the support layer SPL may include a first support layer SPL1 and a second support layer SPL2. The first support layer SPL1 and the second support layer SPL2 may be stacked, e.g., sequentially stacked. For example, the second support layer SPL2 may be provided on the second metal layer MEL2, and the first support layer SPL1 may be provided on the second support layer SPL2.

Each of the first support layer SPL1 and the second support layer SPL2 may include at least one of polyamide (PA), polyimide, polyamideimide (PAI), polyether ether ketone, polyacrylic acid (PAA), polycarbonate (PC), polyethylene terephthalate (PET), polyethylene (PE), polypropylene (PP), polyethylene naphthalate (PEN), acrylonitrile butadiene styrene (ABS), polyvinyl chloride (PVC), polystyrene (PS), poly(p-phenylene oxide (PPO), acrylic resin, polybutylene terephthalate (PBT), and poly(methyl methacrylate) (PMMA). The polyethylene (PE) may be, for example, low-density polyethylene (LDPE) or high-density polyethylene (HDPE). The acrylic resin may be, for example, a resin formed of or including a monomer mainly composed of acrylic acid or methacrylic acid, or a derivative thereof.

An elongation of the first support layer SPL1 may be greater than the elongation of the second support layer SPL2. For example, the elongation of the first support layer SPL1 may range from ≥ 50% to ≤ 100%, and the elongation of the second support layer SPL2 may range from ≥ 2% to ≤ 30%.

A tensile strength of the second support layer SPL2 may be greater than the tensile strength of the first support layer SPL1. In an example embodiment, the tensile strength of the first support layer SPL1 may range from ≥ 100 N/mm² to ≤ 240 N/mm², and the tensile strength of the second support layer SPL2 may range from ≥ 250 N/mm² to ≤ 500 N/mm². For example, the tensile strength of the first support layer SPL1 may range from ≥ 200 N/mm² to ≤ 230 N/mm². The tensile strength of the second support layer SPL2 may range from ≥ 250 N/mm² to ≤ 300 N/mm².

For example, the first support layer SPL1 may be or include at least one of polyethylene terephthalate (PET), polyethylene (PE), or polypropylene (PP). The polyethylene (PE) may be low-density polyethylene (LDPE) or high-density polyethylene (HDPE). For example, the second support layer SPL2 may be polycarbonate (PC), polyimide (PI), polyamide(PA), polyamideimide (PAI), polybutylene terephthalate (PBT), or polyether ether ketone.

Each of, or one of, the first support layer SPL1 and the second support layer SPL2 may range from ≥ 0.5 µm to ≤ 8 µm. For example, each of, or one of, the first support layer SPL1 and the second support layer SPL2 may range from ≥ 2 µm to ≤ 4 µm. A thickness ratio of the first support layer SPL1 and the second support layer SPL2 may range from 3:1 to 1:1 or may be 1:1. When the thickness ratio of the first support layer SPL1 and the second support layer SPL2 falls within the range above, the shape of the composite substrate CPS may be maintained during battery fabrication process while ensuring battery safety.

Referring to FIG. 9, the support layer SPL may include a first support layer SPL1, a second support layer SPL2, and a third support layer SPL3. The first support layer SPL1, the second support layer SPL2, and the third support layer SPL3 may be stacked, e.g., sequentially stacked. For example, the third support layer SPL3 may be provided on the second metal layer MEL2, the second support layer SPL2 may be provided on the third support layer SPL3, and the first support layer SPL1 may be provided on the second support layer SPL2.

The properties of the first, second, and third support layers SPL1, SPL2, and SPL3 are not limited as long as they contribute to the battery safety and the maintenance of the shape of the composite substrate CPS. For example, the first support layer SPL1 and the third support layer SPL3 may have elongations that are greater than the elongation of the second support layer SPL2, and the second support layer SPL2 may have a tensile strength that is greater than the tensile strengths of the first support layer SPL1 and the third support layer SPL3. For example, the elongation of the second support layer SPL2 may be greater than the elongations of the first support layer SPL1 and the third support layer SPL3, and the tensile strength of each of, or one of, the first support layer SPL1 and the third support layer SPL3 may be greater than the tensile strength of the second support layer SPL2.

A component of each of, or one of, the first, second, and third support layers SPL1, SPL2, and SPL3 may include the aforementioned examples of the polymer.

In addition to FIGS. 8 and 9, the support layer SPL may include four or more support layers, and the number of the support layers is not particularly limited.

Referring back to FIGS. 7, 8, and 9, an elongation of the support layer SPL may be equal to or less than 75%. For example, the elongation of the support layer SPL may range from ≥ 20% to ≤ 75%, from ≥ 30% to ≤ 65%, from ≥ 30% to ≤ 60%, or from ≥ 30% to ≤ 45%. When the elongation of the support layer SPL falls within any of the above ranges, the safety of a battery may be provided.

A yield strength of the support layer SPL may be equal to or greater than 150 N/mm². For example, the yield strength of the support layer SPL may range from ≥ 150 N/mm² to ≤ 340 N/mm². The yield strength may be defined to refer to a limit stress at which a specimen begins to experience elastic deformation.

A tensile strength of the support layer SPL may be equal to or greater than 195 N/mm². For example, the tensile strength of the support layer SPL may range from ≥ 195 N/mm² to ≤ 260 N/mm², from ≥ 205 N/mm² to ≤ 260 N/mm², from ≥ 210 N/mm² to ≤ 255 N/mm², from ≥ 220 N/mm² to ≤ 255 N/mm², or from ≥ 240 N/mm² to ≤ 255 N/mm².

When each of, or one of, the yield strength and the tensile strength of the support layer SPL falls within the range above, the shape of the composite substrate CPS may be hindered or prevented from being deformed during the battery fabrication process.

The following description will focus on some example embodiments of the present disclosure. The following example embodiments are provided to aid in understanding of the present disclosure and are not intended to limit the scope of the present disclosure.

### Embodiment 1

A rechargeable lithium battery was prepared which includes a composite substrate for the rechargeable lithium battery. The composite substrate may include a support layer including polyethylene terephthalate (PET) and polycarbonate (PC), a first metal layer on a top surface of the support layer, and a second metal layer on a bottom surface of the support layer. The polyethylene terephthalate (PET) and the polycarbonate (PC) were provided in a weight ratio of 9:1.

### Embodiment 2

A rechargeable lithium battery including a composite substrate was prepared in the same method as in Embodiment 1, except that the polyethylene terephthalate (PET) and the polycarbonate (PC) were provided in a weight ratio of 7:3.

### Embodiment 3

A rechargeable lithium battery including a composite substrate was prepared in the same method as in Embodiment 1, with a difference that the polyethylene terephthalate (PET) and the polycarbonate (PC) were provided in a weight ratio of 6:4.

### Embodiment 4

A rechargeable lithium battery including a composite substrate was prepared in the same method as in Embodiment 1, with a difference that the polyethylene terephthalate (PET) and the polycarbonate (PC) were provided in a weight ratio of 5:5.

### Embodiment 5

A rechargeable lithium battery was prepared which includes a composite substrate for the rechargeable lithium battery. The composite substrate included a support layer including a first support layer and a second support layer, a first metal layer on a top surface of the support layer, and a second metal layer on a bottom surface of the support layer. The first support layer included polyethylene terephthalate (PET). The second support layer included polycarbonate (PC). The first support layer and the second support layer had a thickness ratio of 1:1.

### Embodiment 6

A rechargeable lithium battery including a composite substrate was prepared in the same method as in Embodiment 5, with a difference that the first support layer and the second support layer had a thickness ratio of 2:1.

### Embodiment 7

A rechargeable lithium battery including a composite substrate was prepared in the same method as in Embodiment 5, with a difference that the first support layer and the second support layer had a thickness ratio of 3:1.

### Comparative Example 1

A rechargeable lithium battery including a composite substrate was prepared in the same method as in Embodiment 1, with a difference that only the polyethylene terephthalate (PET) was included.

### Comparative Example 2

A rechargeable lithium battery including a composite substrate was prepared in the same method as in Embodiment 1, with a difference that only the polycarbonate (PC) was included.

### Comparative Example 3

A rechargeable lithium battery including a composite substrate was prepared in the same method as in Embodiment 1, with a difference that the polyethylene terephthalate (PET) and the polycarbonate (PC) were provided in a weight ratio of 3:7.

### Comparative Example 4

A rechargeable lithium battery including a composite substrate was prepared in the same method as in Embodiment 1, with a difference that the polyethylene terephthalate (PET) and the polycarbonate (PC) were provided in a weight ratio of 2:8.

### Comparative Example 5

A rechargeable lithium battery including a composite substrate was prepared in the same method as in Embodiment 5, with a difference that the first support layer and the second support layer had a thickness ratio of 1:2.

### Comparative Example 6

A rechargeable lithium battery including a composite substrate was prepared in the same method as in Embodiment 5, with a difference that the first support layer and the second support layer had a thickness ratio of 1:3.

### Experimental Example 1: Evaluation of Cell Safety and Elongation of Composite Substrate including a Plurality of Polymers

The composite substrate of Embodiments 1 to 4 and Comparative Examples 1 to 4 and the cell including the same were used to evaluate cell safety and an elongation of the composite substrate. In accordance with the method described in KS B 0801, a tensile tester used a No. 5 test specimen to measure a tensile strength of the support layer and an elongation of the composite substrate. A No. 5 test specimen in accordance with KS B 0801 was collected using a specimen cutter mold, and weight and thickness of the collected specimen were measured. The thickness and width of the collected specimen were input to the tensile tester, and a tensile strength of the support layer and an elongation of the composite substrate were measured under the following condition.
Pre-loading speed : 10 mm/min
Pre-load : 0.2 kgf
Test speed : 30 mm/min

The AC-IR of the cell was measured using the following method. The cell was shipping charged (state of charge SOC 30%) after fabrication thereof. An internal resistance (IR) was measured at room temperature (23±2°C) using AC-Impedance equipment, and an average value was obtained after 3 times measurement.

The cell safety was measured by evaluation whether ignition occurred when the cell was perforated with a nail. When tested five times, when no ignition occurred five times, the cell was labeled as 5OK, and if ignition occurred five times, the cell was labeled as 5NG. The result is listed in Table 1.

**[Table 1]**

| Category | First polymer | | Second polymer | | Tensile strength of support layer (N/mm²) | Elongation of composite substrate (%) | Cell AC-IR | Cell safety |
|---|---|---|---|---|---|---|---|---|
| | Name | Amount (wt%) | Name | Amount (wt%) | | | | |
| Embodiment 1 | PET | 90 | PC | 10 | 210 | 65 | 5.67 | 5OK |
| Embodiment 2 | PET | 70 | PC | 30 | 221 | 57 | 5.65 | 5OK |
| Embodiment 3 | PET | 60 | PC | 40 | 242 | 42 | 5.66 | 5OK |
| Embodiment 4 | PET | 50 | PC | 50 | 255 | 30 | 5.63 | 5OK |
| Comparative Example 1 | PET | 100 | - | - | 200 | 80 | 5.64 | 5OK |
| Comparative Example 2 | - | - | PC | 100 | 280 | 3 | 5.65 | 5NG |
| Comparative Example 3 | PET | 30 | PC | 70 | 261 | 10 | 5.64 | 5NG |
| Comparative Example 4 | PET | 20 | PC | 80 | 273 | 5 | 5.68 | 5NG |

Referring to Table 1, the elongation of the composite substrate according to Embodiments 1 to 4 was less than the elongation of the composite substrate according to Comparative Example 1. Unlike Comparative Examples 2 to 4, no ignition occurred in the battery according to Embodiments 1 to 4.

### Experimental Example 2: Evaluation of Cell Safety and Elongation of Composite Substrate including a Plurality of Support Layers

The composite substrate of Embodiments 5 to 7 and Comparative Examples 1, 2, 5, and 6 and the cell including the same were used to evaluate cell safety and an elongation of the composite substrate. The evaluation method was the same as in Experimental Example 1. When tested five times, when ignition occurred three times, the cell was labeled as 3NG. The result is listed in Table 2.

**[Table 2]**

| Category | First support layer | | Second support layer | | Tensile strength of support layer (N/mm²) | Elongation of composite substrate (%) | Cell AC-IR | Cell safety |
|---|---|---|---|---|---|---|---|---|
| | Name | Thickness (*µ*m) | Name | Thickness (*µ*m) | | | | |
| Embodiment 5 | PET | 1 | PC | 1 | 254 | 31 | 5.64 | 5OK |
| Embodiment 6 | PET | 2 | PC | 1 | 222 | 54 | 5.68 | 5OK |
| Embodiment 7 | PET | 3 | PC | 1 | 198 | 78 | 5.70 | 5OK |
| Comparative Example 5 | PET | 1 | PC | 2 | 178 | 15 | 5.62 | 3NG |
| Comparative Example 6 | PET | 1 | PC | 3 | 261 | 10 | 5.64 | 5NG |

Referring to Table 2, the elongation of the composite substrate according to Embodiments 5 to 7 was less than the elongation of the composite substrate according to Comparative Example 1. Unlike Comparative Examples 2, 5, and 6, no ignition was occurred in the battery according to Embodiments 5 to 7.

A composite substrate according to the present disclosure may provide the battery with safety, improve an energy density, and maintain its shape during battery fabrication process. A rechargeable lithium battery including a composite substrate of the present disclosure may have superior safety and desired or improved energy density.

Although some example embodiments of the present disclosure have been discussed with reference to accompanying figures, it will be understood that various changes in form and details may be made therein without departing from the spirit and scope of the present disclosure. It will be apparent to those skilled in the art that various substitution, modifications, and changes may be thereto without departing from the scope and spirit of the present disclosure.

## Claims

1. A composite substrate (CPS) for a rechargeable lithium battery (100), the composite substrate (CPS) comprising:
a support layer (SPL);
a first metal layer (MEL1) on a top surface of the support layer (SPL); and
a second metal layer (MEL2) on a bottom surface of the support layer (SPL),
wherein the support layer (SPL) includes a first polymer (POL1) and a second polymer (POL2) that are different from each other,
wherein a tensile strength of the second polymer (POL2) is greater than a tensile strength of the first polymer (POL1), and
wherein an elongation of the first polymer (POL1) is greater than an elongation of the second polymer (POL2).

2. The composite substrate (CPS) of claim 1, wherein at least one of the first polymer (POL1) and the second polymer (POL2) comprises at least one of polyamide, polyimide, polyamideimide, polyether ether ketone, polyacrylic acid, polycarbonate, polyethylene terephthalate, polyethylene, polypropylene, polyethylene naphthalate, acrylonitrile butadiene styrene, polyvinyl chloride, polystyrene, polyphenylene ether, acrylic resin, polybutylene terephthalate, and polymethyl methacrylate.

3. The composite substrate (CPS) of claim 1 or 2, wherein a weight ratio of the first polymer (POL1) to the second polymer (POL2) is in a range of 9: 1 to 5:5.

4. The composite substrate (CPS) of any of claims 1 to 3, wherein at least one of the first and second metal layers (MEL1; MEL2) comprises at least one of aluminum, aluminum alloys, copper, copper alloys, nickel, nickel alloys, titanium, titanium alloys, iron, iron alloys, silver, and silver alloys.

5. The composite substrate (CPS) of any of claims 1 to 4, wherein:
a thickness of at least one of the first and second metal layers (MEL1; MEL2) is equal to or less than 5 µm, and
a thickness of the support layer (SPL) is between ≥ 2 µm to ≤ 10 µm.

6. The composite substrate (CPS) of any of claims 1 to 5, wherein a tensile strength of the support layer (SPL) is in a range of ≥ 195 N/mm² to ≤ 260 N/mm².

7. The composite substrate (CPS) of any of claims 1 to 6, wherein a yield strength of the support layer (SPL) is equal to or greater than 150 N/mm².

8. The composite substrate (CPS) of any of claims 1 to 7, wherein an elongation of the composite substrate (CPS) is in a range of ≥ 20% to ≤ 75%.

9. The composite substrate (CPS) of any of claims 1 to 8,
wherein the support layer (SPL) includes a first support layer (SPL1) and a first support layer (SPL2) that are stacked,
said having a tensile strength of the second support layer (SPL2) is greater than a tensile strength of the first support layer (SPL1), and
wherein an elongation of said first support layer (SPL1) is greater than an elongation of said second support layer (SPL2).

10. The composite substrate (CPS) of claim 9, wherein:
the elongation of said first support layer (SPL1) is in a range of ≥ 50% to ≤ 100%, and
the elongation of said second support layer (SPL2) is in a range of ≥ 2% to ≤ 30%.

11. The composite substrate (CPS) of claim 9 or 10, wherein:
the tensile strength of said first support layer (SPL1) is in a range of ≥ 100 N/mm² to ≤ 240 N/mm², and
the tensile strength of said second support layer (SPL2) is in a range of ≥ 250 N/mm² to ≤ 500 N/mm².

12. The composite substrate (CPS) of any of claims 9 to 11, wherein at least one of said first support layer (SPL1) and said second support layer (SPL2) comprises at least one of polyamide, polyimide, polyamideimide, polyether ether ketone, polyacrylic acid, polycarbonate, polyethylene terephthalate, polyethylene, polypropylene, polyethylene naphthalate, acrylonitrile butadiene styrene, polyvinyl chloride, polystyrene, polyphenylene ether, acrylic resin, polybutylene terephthalate, and polymethyl methacrylate.

13. The composite substrate (CPS) of any of claims 9 to 12, wherein a thickness of the support layer (SPL) including both said first support layer (SPL1) and said second support layer (SPL2) is in a range of ≥ 2 µm to ≤ 10 µm.

14. The composite substrate (CPS) of any of claims 9 to 13, wherein a thickness ratio of the first support layer (SPL1) to the second support layer (SPL2) is in a range of 3:1 to 1:1.

15. A rechargeable lithium battery (100) comprising the composite substrate (CPS) as set forth in any of claims 1 to 14.
